# EUROPEAN PATENT SPECIFICATION

(11) **EP 2 048 192 B1**
(45) Date of publication and mention of the grant of the patent: **20.04.2011**
(21) Application number: 07828219.1
(22) Date of filing: 10.09.2007
(51) Int. Cl.: C08L 9/00, B60C 15/06, C08K 3/04, C08K 5/16

(54) **RUBBER COMPOSITION FOR CLINCH APEX AND PNEUMATIC TIRE WITH CLINCH APEX UTILIZING THE SAME**
KAUTSCHUKZUSAMMENSETZUNG FÜR EINEN CLINCH-APEX UND REIFEN MIT CLINCH-APEX DAMIT
COMPOSITION DE CAOUTCHOUC POUR APEX DE RIVET ET PNEU AVEC UN APEX DE RIVET UTILISANT CELLE-CI

(30) Priority: 05.10.2006 JP 2006273907
(43) Date of publication of application: 15.04.2009
(73) Proprietor: Sumitomo Rubber Industries, Ltd., Kobe-shi, Hyogo 651-0072 (JP)
(72) Inventor: TAGUCHI, Takafumi, Kobe-shi Hyogo 651-0072 (JP)
(74) Representative: Manitz, Finsterwald & Partner GbR
(86) International application number: PCT/JP2007/067576
(87) International publication number: WO 2008/044410

(56) References cited:
- EP-A1- 1 582 561
- JP-A- 2001 026 681
- JP-A- 2001 026 681
- JP-A- 2002 060 551
- JP-A- 2002 060 551
- JP-A- 2004 315 700
- JP-A- 2004 315 700
- JP-A- 2005 272 604
- US-A1- 2002 165 302

## Description

### TECHNICAL FIELD

The present invention relates to a rubber composition for a clinch apex and a pneumatic tire having the clinch apex using the same.

### BACKGROUND ART

The clinch apex of a pneumatic tire is a member brought in contact with a rim at which abrasion caused by friction with the rim is easily generated. Accordingly, a large amount of a butadiene rubber (BR) is compounded in the clinch apex for suppressing abrasion caused by friction with the rim.

Also, a rubber composition in which carbon black with a high structure is compounded, for example, in an amount of 50 to 80 parts by weight has been applied for reducing rolling resistance. Further, it has been also known that BR with much linear component (little branch) is compounded as BR for reducing rolling resistance (for example, refer to JP2004-106796A).

However, there have been problems that these rubber compositions are very hardly processed at a tire producing site, a kneading step in a mixing process cannot help being increased and edge cutting in an extrusion step is generated.

Further, a rubber composition for coating a cord of a breaker or a belt layer that is compounded with para-benzoquinone diimine for enhancing rigidity without increasing heat build-up has been known (for example, refer to JP2002-60551A). However, there is a space for improvement in reduction of slipping of the clinch apex of a tire on the metal rim and suppression of generation of chafing between the rim and the clinch apex.

Further, there has been known a rubber composition for a sidewall compounded with para-benzoquinone diimine for heightening strength at break, tear strength, ozone crack resistance and processability (for example, refer to JP2001-26681A). However, there is a space for improvement in reduction of slipping of the clinch apex of a tire on the metal rim and suppression of generation of chafing between the rim and the clinch apex.

EP 1 582 561 A1 discloses a rubber composition for a tire bead including 100 parts by weight of a rubber component, which includes e.g. 80 % by weight of NR and 20 % by weight of BR, 10 to 100 parts by weight of carbon black and 5 to 120 parts by weight of a thin plate-like natural mineral.

JP 2004-315,700 A discloses a rubber composition for a tire tread including 100 parts by weight of a diene rubber, 90 to 150 parts by weight of carbon black having a N₂SA between 130 and 250 m²/g and a DBP oil absorption of 100 to 140 ml/g, 70 to 110 parts by weight of an oil and 0.1 to 5.0 parts by weight of a para-benzoquinone diimine compound.

### DISCLOSURE OF INVENTION

It is an object of the present invention to provide a rubber composition for a clinch apex keeping hardness constant, suppressing prevulcanization, reducing rolling resistance, improving processability, suppressing generation of chafing between the clinch apex and a rim and hardly causing slipping of the clinch apex on the rim.

The present invention relates to a rubber composition for a clinch apex, comprising 55 to 75 parts by weight of carbon black and 1 to 5 parts by weight of para-benzoquinone diimine based on 100 parts by weight of a rubber component comprising 10 to 50 % by weight of a natural rubber and/or an isoprene rubber and 50 to 90 % by weight of a butadiene rubber having a Mooney viscosity measured in accordance with JISK 6300 at 100°C of 30 to 55 in an unvulcanized state.

The loss tangent (tan δ) of the rubber composition for a clinch apex measured under conditions of 70°C and a dynamic strain of 2 % is preferably not more than 0.150.

Further, the present invention relates to a pneumatic tire having the clinch apex prepared by using the rubber composition for a clinch apex.

### BRIEF DESCRIPTION OF DRAWING

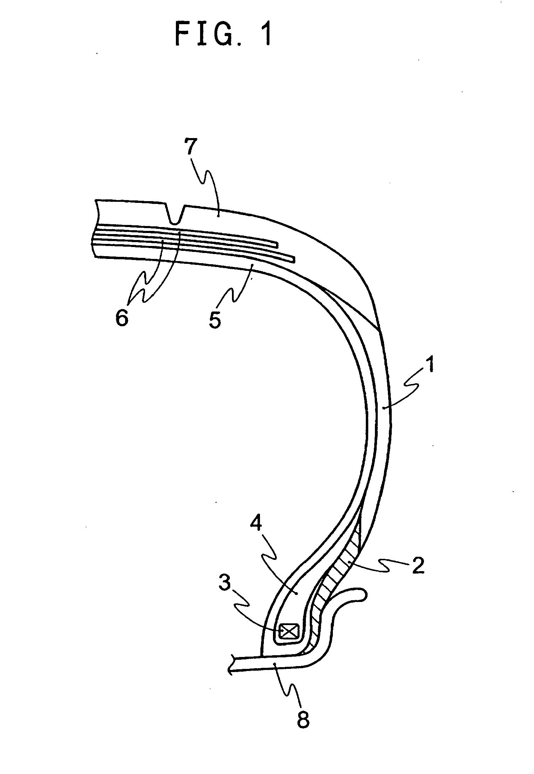

Fig. 1 is a partial cross-sectional view of the tire using the clinch apex of the present invention.

### BEST MODE FOR CARRYING OUT THE INVENTION

The rubber composition for a clinch apex of the present invention comprises a rubber component, carbon black and para-benzoquinone diimine.

Fig. 1 is a partial cross-sectional view of a tire using the clinch apex of the present invention.

As shown in Fig. 1, the tire of the present invention can be composed of, for example, parts such as a sidewall 1, a clinch apex 2, a bead core 3, a bead apex 4, an inner liner 5, a belt 6 and a tread 7. In Fig. 1, the bead apex 4 is arranged inside the clinch apex 2 and extends outward from the bead core 3 in a radial direction. Further, the sidewall 1 as an outer surface of the tire is so arranged as to extend inward from the both end portions of the tread 7 in the radial direction of the tire, and the clinch apex 2 is provided at an inner end of each sidewall 1. Further, the inner end of the clinch apex in the radial direction of the tire can be brought in contact with a rim 8 made of metal.

The rubber component comprises a natural rubber (NR) and/or an isoprene rubber (IR) and a butadiene rubber (BR).

The NR is not specifically limited and rubbers such as TSR20 grade and RSS#3 grade usually used in the rubber industry can be used.

The IR is not specifically limited and those usually used in the rubber industry can be used.

The content of NR and/or IR in the rubber component is not less than 10 % by weight, preferably not less than 30 % by weight. When the content of NR and/or IR is less than 10 % by weight, stickiness of an unvulcanized rubber is lowered and it cannot be molded to a tire. Further, the content of NR and/or IR is not more than 50 % by weight, preferably not more than 45 % by weight. When the content of NR and/or IR is more than 50 % by weight, thermal aging resistance is deteriorated and durability of the tire cannot be maintained.

As the BR, those such as BR with high cis content usually used in the rubber industry can be used, but those having high viscosity are preferable for reducing rolling resistance. When BR with low viscosity is compounded, since its molecular weight is small, there are many molecular terminals existing and the rolling resistance is increased by their thermal movement.

The Mooney viscosity of BR at 100°C (ML₁₊₄/100°C) in an unvulcanized state is not less than 30, preferably not less than 35. When ML₁₊₄/100°C is less than 30, the viscosity of the rubber composition is too low and good unvulcanized state cannot be retained. Further, the ML₁₊₄/100°C is preferably not more than 55, more preferably not more than 45. When the ML₁₊₄/100°C is more than 55, the viscosity of the rubber composition is too high and therefore processability is deteriorated.

Further, since the Mooney viscosity of BR at 100°C (ML₁₊₄/100°C) in an unvulcanized state is 30 to 55, the viscosity of the obtained rubber composition can be suitably kept and therefore there can be obtained the rubber composition for a clinch apex capable of suppressing generation of chafing between the clinch apex and the rim and hardly causing slipping of the clinch apex on the rim.

Examples of BR satisfying the requirement that the Mooney viscosity is 30 to 55 in an unvulcanized state at 100°C are commercially available products such as BR 150B manufactured by Ube Industries, Ltd. (Mooney viscosity at 100°C: 40), BUDEN 1280 manufactured by Goodyear Co., Ltd. (Mooney viscosity at 100°C: 40) and Nipol BR1220 manufactured by ZEON Corporation (Mooney viscosity at 100°C: 44).

Examples of BR not satisfying the requirement that the Mooney viscosity is 30 to 55 in an unvulcanized state at 100°C are commercially available products such as BR 130B manufactured by Ube Industries, Ltd. (Mooney viscosity at 100°C: 29) and BR02LL manufactured by JSR Corporation (Mooney viscosity at 100°C: 28).

The content of BR in the rubber component is not less than 50 % by weight, preferably not less than 55 % by weight. When the content of BR is less than 50 % by weight, chafing resistance of the rubber composition for a clinch apex between the clinch apex and the rim cannot be secured. Further, the content of BR is not more than 90 % by weight, preferably not more than 80 % by weight. When the content of BR is more than 90 % by weight, rubber material is crumbled to pieces and cannot be molded to a tire.

The chafing mentioned in the present invention means abrasion of the clinch apex which occurs between the clinch apex and the rim, and the chafing resistance means performance suppressing generation of the chafing between the clinch apex and the rim.

Examples of the rubber components other than NR, IR and BR are a styrene-butadiene rubber (SBR), a butyl rubber (IIR), a halogenated butyl rubber (X-IIR), an acrylonitrile-butadiene rubber (NBR), a chloroprene rubber (CR), an ethylene-propylene-diene rubber (EPDM) and a halogenated product of a copolymer of isomonoolefin with para-alkylstyrene. These may be used alone, or may be used in combination of two or more thereof, together with NR and/or IR and BR, but it is preferable that rubber components other than the NR, IR and BR are not used because tan δ cannot be reduced when a tire is produced.

Carbon black is not specifically limited and those conventionally used in the tire industry such as SAF, ISAF, HAF, FEF and GPF can be used.

The compounding amount of carbon black is not less than 55 parts by weight, preferably not less than 65 parts by weight based on 100 parts by weight of the rubber components. When the compounding amount of carbon black is less than 55 parts by weight, rubber hardness is low and chafing resistance between the clinch apex and the rim is deteriorated. Further, the compounding amount of carbon black is not more than 75 parts by weight, preferably not more than 73 parts by weight. When the compounding amount of carbon black is more than 75 parts by weight, the viscosity of the unvulcanized rubber is too high to deteriorate processability.

The para-benzoquinone diimine used in the present invention is compounded as an antioxidant.

The rubber composition for a clinch apex suppressing generation of chafing between the clinch apex and the rim and hardly generating slipping of the clinch apex on the rim can be obtained for reason that by compounding para-benzoquinone diimine in the rubber composition, the viscosity of the obtained rubber composition can be kept low even if a BR with high viscosity is used as a rubber component.

The compounding amount of para-benzoquinone diimine is not less than 1 part by weight, preferably not less than 1.5 parts by weight based on 100 parts by weight of the rubber components. When the compounding amount of para-benzoquinone diimine is less than 1 part by weight, the effect of viscosity reduction obtained by the compounding is not exhibited. Further, the compounding amount of para-benzoquinone diimine is not more than 5 parts by weight, preferably not more than 3 parts by weight. When the compounding amount of para-benzoquinone diimine is more than 5 parts by weight, the cost of rubber composition is raised and it is not fit for practical use.

In the present invention, the BR with high viscosity is compounded for improving low heat build-up property, and although processability is easily lowered by compounding the BR, the processability is not lowered or rather can be improved by compounding para-benzoquinone diimine.

In the present invention, an antioxidant such as phenylenediamine antioxidant conventionally used in the tire industry may be used together with para-benzoquinone diimine.

When an antioxidant other than para-benzoquinone diimine is used, the compounding amount thereof is preferably not less than 1.5 parts by weight based on 100 parts by weight of the rubber components. Further, the compounding amount of the antioxidant other than para-benzoquinone diimine is preferably not more than 2.0 parts by weight. When the compounding amount thereof is more than 2.0 parts by weight, the cost of the rubber composition tends to be too high.

Examples of the antioxidant other than para-benzoquinone diimine are N-1,3-dimethylbutyl-N'-phenyl-para-phenylenediamine (6-PPD) and the like.

The total compounding amount of the antioxidants is preferably not less than 2.0 parts by weight based on 100 parts by weight of the rubber components. When the total compounding amount of the antioxidants is less than 2.0 parts by weight, there is a tendency that the expected effect of preventing aging is not obtained. Further, the total compounding amount of the antioxidants is preferably not more than 4.0 parts by weight. When the total compounding amount of the antioxidants is more than 4.0 parts by weight, the cost of the rubber composition tends to be too high.

A rubber composition comprising a reaction product of para-benzoquinone diimine with squalane that is one kind of acyclic triterpenes is known for improving aging resistance and ozone resistance. However, when the reaction product is compounded in the rubber composition for a clinch apex, low fuel consumption obtained by the present invention cannot be retained.

To the rubber composition for a clinch apex of the present invention can be suitably compounded various compounding agents conventionally used in the rubber industry such as aromatic oil, wax, stearic acid, zinc oxide, a vulcanizing agent such as sulfur and various vulcanization accelerators, if necessary, in addition to the aforementioned rubber components, carbon black, para-benzoquinone diimine and the antioxidant other than para-benzoquinone diimine.

The clinch apex 2 is a rubber portion provided at the inner end of the sidewall 1 being the outer surface of the tire, and brought in contact with the rim 8 made of metal, and has per se a role of preventing abrasion of the clinch apex 2 caused by contact with the rim 8 made of metal. Further, the clinch apex 2 is specifically required to have roles of functioning as a buffer between the bead wire with high rigidity and the rim 8 made of metal and suppressing deformation after repeated rolling while the sidewall 1 is not required to have such roles.

Since the rubber composition for a clinch apex of the present invention can reduce rolling resistance and improve fuel cost, it can be used as the clinch apex among tire members.

The pneumatic tire of the present invention can be produced by a usual method using the rubber composition for a clinch apex of the present invention. Namely, unvulcanized rubber composition compounded with the compounding agents if necessary is extruded and processed to the shape of the clinch apex and laminated with other tire members to form unvulcanized tires on a tire molding machine. The pneumatic tires of the present invention can be obtained by heating and pressurizing the unvulcanized tires in a vulcanizer.

### EXAMPLES

The present invention is specifically explained based on Examples, but the present invention is not limited thereto.

Chemicals used in Examples and Comparative Examples are collectively explained hereinafter.
Natural rubber (NR): TSR20
High viscosity butadiene rubber (High viscosity BR): BR150B available from Ube Industries, Ltd. (Mooney viscosity at 100°C: 40, high cis content type)
Low viscosity butadiene rubber (Low viscosity BR): BR130B available from Ube Industries, Ltd. (Mooney viscosity at 100°C: 29, high cis content type)
Carbon black: DIABLACK N351 available from Mitsubishi Chemical Corporation
Aromatic oil: DIANA PROCESS AH24 available from Idemitsu Kosan Co., Ltd.
Wax: OZOACE 0355 available from NIPPON SEIRO CO., LTD. Antioxidant (1): 6-QDI (para-benzoquinone diimine, namely N-phenyl-N'-1,3-dimethylbutyl-paraquinone diimine) available from Flexsys Co., Ltd.
Antioxidant (2): Vulkanox 4020 (N-1,3-dimethylbutyl-N'-phenyl-para-phenylenediamine) (6-PPD) available from Bayer AG
Stearic acid: Stearic acid "TSUBAKI" available from NOF Corporation Zinc oxide: ZINC OXIDE NO.2 available from Mitsui Mining & Smelting Co., Ltd.
Insoluble sulfur: Seimi Sulfur available from NIPPON KANRYU INDUSTRY CO., LTD. (oil content: 10 %)
Vulcanization accelerator: Nocceler NS (N-tert-butyl-2-benzothiazolylsulfenamide) available from Ouchi Shinko Chemical Industrial Co., Ltd.

### EXAMPLES 1 to 3 and COMPARATIVE EXAMPLES 1 to 4

Chemicals excluding insoluble sulfur and a vulcanization accelerator were kneaded in accordance with the compounding formulations shown in Tables 1 and 2 under the condition of 160°C for 4 minutes using a Banbury mixer, to obtain kneaded products. Insoluble sulfur and the vulcanization accelerator were added to the obtained kneaded products, and were kneaded under the condition of 100°C for 5 minutes using an open roll to obtain unvulcanized rubber compositions. Further, the obtained unvulcanized rubber compositions were press-vulcanized under the condition of 170°C for 15 minutes to obtain the vulcanized rubber compositions of Examples 1 to 3 and Comparative Examples 1 to 4.

### (Mooney viscosity)

The unvulcanized rubber compositions were used. The Mooney viscosity (ML₁₊₄/130°C) of the unvulcanized rubber compositions was measured after a lapse of 4 minutes after rotating a small rotor at a temperature condition of 130°C heated by preheating for 1 minute, in accordance with JIS K 6300 "Rubber, unvulcanizedPhysical properties -- Part 1: Method for measuring viscosity and scorch time with a Mooney viscometer" using a Mooney viscosity tester. The smaller the Mooney viscosity is, the more superior the processability is.

### (Scorch time)

A time (scorch time (min)) at which the viscosity of the unvulcanized rubber compositions was raised by 10 points at 130°C was measured in accordance with JIS K 6300 "Rubber, unvulcanizedPhysical properties -- Part 1: Method for measuring viscosity and scorch time with a Mooney viscometer". The larger the scorch time is, the more the prevulcanization can be preferably suppressed.

### (Rubber hardness)

Rubber hardness was measured with an A type durometer in accordance with JIS K 6253 "Test method of Hardness of Vulcanized rubber and Thermoplastic rubber"

### (Viscoelasticity test)

Using a viscoelasticity spectrometer manufactured by Iwamoto Corporation, loss tangent tan δ and complex modulus E* (MPa) of the vulcanized rubber compositions at 70°C were measured under the conditions of an initial strain of 10 %, a dynamic strain of 2 % and a frequency of 10 Hz. The smaller the tan δ is, the more the heat build-up of the rubber compositions is suppressed and the more superior the low heat build-up property is. The larger the E* is, the more superior the rigidity is.

### (Extrusion processability)

The kneaded products obtained by kneading with a Banbury mixer at the preparation step of the vulcanized rubber compositions were extruded with a brabender at a temperature of 100°C and sensory evaluation of extrusion processability was made on the basis of 3 stages (⊚: Extrusion processability was superior. O: Extrusion processability was an adoptable level. ×: Extrusion processability was bad.).

### (Rolling resistance)

The unvulcanized rubber compositions were molded into the shape of a clinch apex on a tire molding machine, laminated with other tire members to form unvulcanized tires and press-vulcanized under the condition of 170°C for 20 minutes to produce the pneumatic tires (tire size: 215/45R17) of Examples 1 to 3 and Comparative Examples 1 to 4.

The pneumatic tires produced were loaded on the rims and run under the conditions of a load of 4.41 kN, a tire inner pressure of 230 kPa and a speed of 80 km/hr using a rolling resistance tester manufactured by Kobe Steel, Ltd. to measure rolling resistance, and sensory evaluation of the rolling resistance was made on the basis of 3 stages (⊚: less than 98, O: 98 to 102, x: more than 102).

### (Appearance after test of in-vehicle running)

The unvulcanized rubber compositions were molded into the shape of a clinch apex on a tire molding machine, laminated with other tire members to form unvulcanized tires and press-vulcanized under the condition of 170°C for 20 minutes to produce the pneumatic tires (tire size: 215/45R17) of Examples 1 to 3 and Comparative Examples 1 to 4.

The pneumatic tires produced were loaded on the rims and run under the conditions of a load of 4.41 kN, a tire inner pressure of 230 kPa and a speed of 80 km/hr using a rolling resistance tester manufactured by Kobe Steel, Ltd. to evaluate the appearance of the clinch apexes and the presence or absence of chafing was evaluated visually by sensory evaluation on the basis of 3 stages (⊚: No chafing and it was good, ○: Chafing was slightly observed, ×: A lot of chafings were observed and it was not good).

### (Slipping of clinch apex on rim)

The unvulcanized rubber compositions were molded into the shape of a clinch apex on a tire molding machine, laminated with other tire members to form unvulcanized tires and press-vulcanized under the condition of 170°C for 20 minutes to produce the pneumatic tires (tire size: 215/45R17) of Examples 1 to 3 and Comparative Examples 1 to 4.

The pneumatic tires were loaded on the rims, a horizontal line was preliminarily marked on the rim and tire, and the pneumatic tires were loaded on axle shafts. While running at a speed of 80 km/hr, the tires were brought to a sudden stop to evaluate the appearance of the clinch apexes and the degree of slipping of the tire on the rim (slipping on the rim) was visually evaluated by sensory evaluation on the basis of 3 stages (⊚: Slipping distance on the rim was less than 2 mm and it was good, ○: Slipping distance on the rim was 2 to 5 mm, ×: Slipping distance on the rim was more than 5 mm and it was not good.).

The evaluation results are shown in Tables 1 and 2.

**Table 1**

| | Example | | Comparative Example | |
|---|---|---|---|---|
| | 1 | 2 | 1 | 2 |
| Amount (part by weight) | | | | |
| NR | 40.00 | 40.00 | 40.00 | 40.00 |
| High viscosity BR | 60.00 | 60.00 | 60.00 | - |
| Low viscosity BR | - | - | - | 60.00 |
| Carbon black | 70.00 | 70.00 | 70.00 | 70.00 |
| Aromatic oil | 10.00 | 10.00 | 10.00 | 10.00 |
| Wax | 1.50 | 1.50 | 1.50 | 1.50 |
| Antioxidant (1) | 3.00 | 1.50 | - | - |
| Antioxidant (2) | - | 1.50 | 3.00 | 3.00 |
| Stearic acid | 2.00 | 2.00 | 2.00 | 2.00 |
| Zinc oxide | 4.00 | 4.00 | 4.00 | 4.00 |
| Insoluble sulfur | 2.00 | 2.00 | 2.00 | 2.00 |
| Vulcanization accelerator | 2.50 | 2.50 | 2.50 | 2.50 |

| Evaluation results | | | | |
|---|---|---|---|---|
| Mooney viscosity (ML₁₊₄/130°C) | 40.00 | 44.00 | 50.00 | 40.00 |
| Rubber hardness | 70 | 70 | 70 | 69 |
| tan δ | 0.140 | 0.142 | 0.150 | 0.160 |
| Extrusion processability | ⊚ | ○ | × | ⊚ |
| Rolling resistance | ⊚ | ⊚ | ○ | × |
| Presence or absence of chafing | ⊚ | ⊚ | ○ | × |
| Slipping on rim | ⊚ | ⊚ | ○ | × |

**Table 2**

| | Example | Comparative | Example |
|---|---|---|---|
| | 3 | 3 | 4 |
| Amount (part by weight) | | | |
| NR | 40.00 | 40.00 | 40.00 |
| High viscosity BR | 60.00 | 60.00 | 60.00 |
| Low viscosity BR | - | - | - |
| Carbon black | 60.00 | 50.00 | 80.00 |
| Aromatic oil | 10.00 | 10.00 | 10.00 |
| Wax | 1.50 | 1.50 | 1.50 |
| Antioxidant (1) | 3.00 | 3.00 | 3.00 |
| Antioxidant (2) | - | - | - |
| Stearic acid | 2.00 | 2.00 | 2.00 |
| Zinc oxide | 4.00 | 4.00 | 4.00 |
| Insoluble sulfur | 2.00 | 2.00 | 2.00 |
| Vulcanization accelerator | 2.50 | 2.50 | 2.50 |

| Evaluation results | | | |
|---|---|---|---|
| Mooney viscosity (ML₁₊₄/130°C) | 35 | 30 | 50 |
| Rubber hardness | 65 | 60 | 75 |
| tan δ | 0.135 | 0.125 | 0.145 |
| Extrusion processability | ⊚ | ○ | × |
| Rolling resistance | ⊚ | ○ | × |
| Presence or absence of chafing | ⊚ | × | × |
| Slipping on rim | ⊚ | × | ○ |

Comparative Example 1 is a rubber composition for a clinch apex of a conventional compounding formulation and is inferior in processability.

In Comparative Example 2, BR with low viscosity is compounded, and processability was improved, but rolling resistance increased.

In Examples 1 and 2, processability is improved in spite of compounding of BR with high viscosity in order to reduce rolling resistance because a specified amount of para-benzoquinone diimine is compounded.

### INDUSTRIAL APPLICABILITY

According to the present invention, the rubber composition for a clinch apex keeping hardness constant, suppressing prevulcanization, reducing rolling resistance, improving processability, suppressing generation of chafing between the clinch apex and a rim and hardly causing slipping of the clinch apex on the rim can be provided by compounding specified amounts of specific rubber components, carbon black and para-benzoquinone diimine.

## Claims

1. A rubber composition for a clinch apex, comprising 55 to 75 parts by weight of carbon black and 1 to 5 parts by weight of parabenzoquinone diimine based on 100 parts by weight of a rubber component comprising 10 to 50 % by weight of a natural rubber and/or an isoprene rubber and 50 to 90 % by weight of a butadiene rubber having a Mooney viscosity measured in accordance with JIS K 6300 at 100 °C of 30 to 55 in an unvulcanized state.

2. The rubber composition for a clinch apex of Claim 1, having a loss tangent (tan δ) of not more than 0.150 measured under conditions of 70 °C and a dynamic strain of 2 %.

3. A pneumatic tire having the clinch apex prepared by using the rubber composition for a clinch apex of Claim 1 or 2.

## Patentansprüche

1. Kautschukzusammensetzung für einen Abriebsstreifenkernreiter enthaltend 55 bis 75 Gewichtsteile Ruß und 1 bis 5 Gewichtsteile para-Benzochinondiimin bezogen auf 100 Gewichtsteile einer Kautschukkomponente, welche 10 bis 50 Gew.-% eines Naturkautschuks und/oder eines Isoprenkautschuks und 50 bis 90 Gew.-% eines Butadienkautschuks mit einer in dem unvulkanisierten Zustand gemäß dem JIS K 6300 bei 100°C gemessenen Mooney-Viskosität von 30 bis 55 enthält.

2. Kautschukzusammensetzung für einen Abriebsstreifenkernreiter nach Anspruch 1 mit einem unter den Bedingungen von 70 °C und einer dynamischen Belastung von 2 % gemessenen Verlusttangens (tan δ) von nicht mehr als 0,150.

3. Luftreifen mit einem Abriebsstreifenkernreiter, der unter Verwendung einer Kautschukzusammensetzung für einen Abriebsstreifenkernreiter nach Anspruch 1 oder 2 hergestellt worden ist.

## Revendications

1. Composition de caoutchouc pour un apex de talon comprenant de 55 à 75 parties en masse de noir de carbone et de 1 à 5 parties en masse de parabenzoquinone-diimine rapportées à 100 parties en masse d'un constituant de caoutchouc comprenant de 10 à 50 % en masse d'un caoutchouc naturel et/ou d'un caoutchouc d'isoprène et de 50 à 90 % en masse d'un caoutchouc de butadiène présentant une viscosité Mooney mesurée selon JIS K 6300 à 100°C de 30 à 55 dans un état non vulcanisé.

2. Composition de caoutchouc pour un apex de talon selon la revendication 1 présentant une tangente d'angle de pertes (tan δ) d'au plus 0,150 mesurée dans des conditions de 70°C et d'une contrainte dynamique de 2 %.

3. Pneumatique présentant l'apex de talon préparé en utilisant la composition de caoutchouc pour un apex de talon selon la revendication 1 ou 2.
